# EUROPEAN PATENT APPLICATION

(11) **EP 1 544 236 A1**
(43) Date of publication of application: **22.06.2005**
(21) Application number: 04380257.8
(22) Date of filing: 13.12.2004
(51) Int. Cl.: C08J 11/08, C10G 1/10

(54) **System for dissolving unuseable tires to obtain oils, coal and steel**

(30) Priority: 15.12.2003 ES 200401058; 14.07.2004 ES 200401717
(71) Applicant: Bio Watt Ibérica, S.L., 47009 Valladolid (ES)
(72) Inventor: Perez Lebena, Eduardo, 47009 Valladolid (ES)
(74) Representative: Ungria Lopez, Javier

(57) **Abstract**

It comprises a reactor tank (8) wherein the discarded tires (1) are deposited and wherein a heat carrying fluid, which produces the dissolving of the tire (1), is introduced. One embodiment provides for means for heating (3) the reactor in order to heat the heat carrying fluid, means comprised of electric heaters, gas heaters or heaters provided with an inlet and outlet for the gases coming from an exhaust pipe of a vehicle. Hence, this makes it possible to dissolve tires.

Another embodiment provides for means (13) for providing a heat carrying fluid shower, in which case the heat carrying fluid is heated by means of a heat exchanger (11).

## Description

### OBJECT OF THE INVENTION

The invention consists of a system provided for the partial conversion into fuel of the tires that are now unuseable.

Besides, the invention carries out the decomposition of discarded tires into each one of the components that form the tires in order to allow reuse thereof in different ways.

### BACKGROUND OF THE INVENTION

Massive production of tires and the difficulties to make them disappear once they are used is one of the major environmental problems of the last few years all around the world.

Currently, discarded tires are the cause, on a worldwide level, of a serious environmental problem and for this reason, this problem is a matter of concern in the European Union. Tires are included among the so-called priority wastes and studies are carried out continuously in order to control and reduce these wastes and to foment recycling thereof. Likewise, the potential energy that these wastes have is also taken advantage of.

Currently there are different techniques on the market for taking advantage of tires once they are unuseable, among which the following stand out:
- Cryogenization, wherein the components are separated by the effect of low temperatures and the rubber is recovered in order to be reused again in the manufacture of tiles, athletic tracks, etc.
- Pyrolysis, wherein the rubber is subjected to a temperature between 400°C-600°C and the decomposition of the tires into mineral oils, gases, coal and steel is produced. The biggest inconvenience is the deficient heat transfer inside the pyrolysis reactor, with the subsequent energy expenditure and the formation of combustible gases that should be collected and burned separately.
- Direct combustion of cement plants at high temperatures with the subsequent problem of emission of gaseous pollutants.

Up until now no devulcanization technique that is considered ideal and that homogenizes the treatment of discarded tires has been found.

The system of the invention carries out the decomposition of discarded tires into each one of the components thereof by means of a dissolving system that is carried out at medium temperatures and at atmospheric pressures.

One embodiment of the invention provides for a reactor vessel wherein the tires are introduced and inside the reactor there is a heat carrying working fluid. The working fluid is heated by external heating of the reactor vessel. The fluid progressively soaks the tires until it is verified that they have begun to dissolve. The arrangement permits energy to be saved as the heat carrying fluid is heated by direct heating of the reactor tank.

In another embodiment, the working fluid is heated previously, until the fluid semivaporizes. Afterwards, the fluid is introduced into the reactor tire storage tank through small holes distributed in a pipe provided in the top part of the tank.

Consequently, the invention carries out solvolosis of the tires, in other words, dissolving in a dissolving medium, by the combined effect of the dissolving power of the working fluid and the temperature which the working fluid is at, the tires into their essential components, oil, coal and steel, which will later be recovered separately.

### DESCRIPTION OF THE INVENTION

In order to overcome the inconveniences and to achieve the above-cited purposes, the invention consists of a system that comprises a reactor tank, preferably with a cylindrical shape, wherein discarded tires are stored and wherein a heat carrying fluid, which gradually comes into contact with the surface of the tires is introduced. Likewise, the tires absorb the fluid and gradually soften until they dissolve.

In order to help the dissolving of the tires the invention provides for means for heating the heat carrying fluid, means which are selected among external heating means of the reactor tank in order to heat by direct contact the heat carrying fluid is in inside the reactor; means for previously heating the heat carrying fluid before it is introduced in the reactor tank and the combination thereof.

The means for heating the reactor tank are defined by external heaters that are located in the bottom part of the reactor. The invention provides that the heaters can also comprise a connection to exhaust pipes of cogeneration engines for the heating thereof. Furthermore, there is an outlet to eliminate the gases introduced in said heaters coming from the exhaust pipe. In another embodiment of the invention, the external heaters are comprised of electric, gas, gas oil, fuel heaters or a combination thereof.

In the event that means for heating the reactor tank are used to heat the heat carrying fluid the temperature range at which the heat carrying fluid is heated is between 275°C and 350°C, which is a relatively low temperature, which represents an energy savings.

The means for previously heating the heat carrying fluid before it is introduced in the reactor tank comprise a heat exchanger wherein the heat carrying fluid is heated to a previously established temperature between 350°C-450°C, in such a way that by effect of the temperature, the fluid passes to a semivaporization state in order to be introduced in the reactor tank. In this case, the working temperature is higher than in the previous case and consequently the energy savings is lower, but even so the temperature is not high and consequently, the energy consumption is not high either.

In order to introduce the heat carrying fluid, the invention provides some means for introducing the heat carrying fluid which are selected among a duct, means for providing a shower of the heat carrying fluid, means located in the top part of the reactor tank and a combination thereof.

The means for providing a shower of the heat carrying fluid are comprised of a pipe provided with a plurality of homogeneously distributed holes.

The heat carrying fluid used is comprised of a product selected from among oils derived from petroleum stable at a temperature range of 275°C-350°C, fuel, used car oil, commercial locomotion or heating gas oil, oils derived from petroleum with a viscosity range similar to that of commercial gas oil and due to the properties thereof they can be useful as solvents. This is the oil itself from tires that the invention obtains upon dissolving the tires and the combination thereof.

The tank is reinforced with a flange and closed by means of a top cover and it is at atmospheric pressure.

In any of the cases it is provided for that the feeding of the tires into the reactor tank can be done by an automatic feeder that can feed whole tires or previously cut up tires.

The automatic feeder is located under the means for providing the heat carrying fluid so that the heat carrying fluid drops directly on the tires or pieces of tires as these tires or pieces of tires drop through the tank.

In this way, the tires absorb the heat carrying fluid until it is verified that they gradually begin to dissolve. The tires decompose into their different components, all in such a way that as the level of tires drops, the tank is filled with tires through the cited automatic feeder.

The invention provides for means for removing the product resulting from the dissolving of the tires that are selected between an overflow pipe placed in the top part of the reactor tank through which said product resulting from the dissolving of the tires comes out; a cone-shaped bottom of the tank that discharges into a horizontal pipe that permits the discharge of the heat carrying fluid and of the oil obtained from the decomposition of the tire, along with powdered coal dissolved therein, and a combination thereof; all in such a way that after the tire is dissolved its metal structure is stacked in the reactor, from which said structure is removed for recycling by some means for collecting the metal structure.

The collecting means are provided for in the top part of the reactor tank and they preferably comprise a removable metal screen wherein the complete steel structure of the tires or the pieces of steel that form part of the pieces of the tire structure, is deposited. The screen is periodically removed and then put back in place in order to permit this component to be continuously eliminated.

The above-cited heat exchanger is heated by means of a burner or by means of an exhaust pipe of a cogeneration engine, in this way taking advantage of the temperature of the exhaust fumes.

In order to provide a better understanding of this specification and forming an integral part thereof, a single figure wherein the object of the invention has been represented in an illustrative and non-restrictive manner, is accompanied.

### BRIEF DESCRIPTION OF THE FIGURES

Figure 1 represents the beginning of the process for dissolving tires deposited inside the reactor tank, according to a schematic representation of an embodiment of the system of the invention.
Figure 2 shows a view equivalent to the preceding figure, wherein the process for dissolving the tires has ended, therefore, only the metal structure thereof which will be removed later for recycling purposes remains.
Figure 3 is a schematic diagram of another embodiment of the system of the invention.

### DESCRIPTION OF THE PREFERRED EMBODIMENT

A description of the invention based on the above-cited figures is made hereinafter.

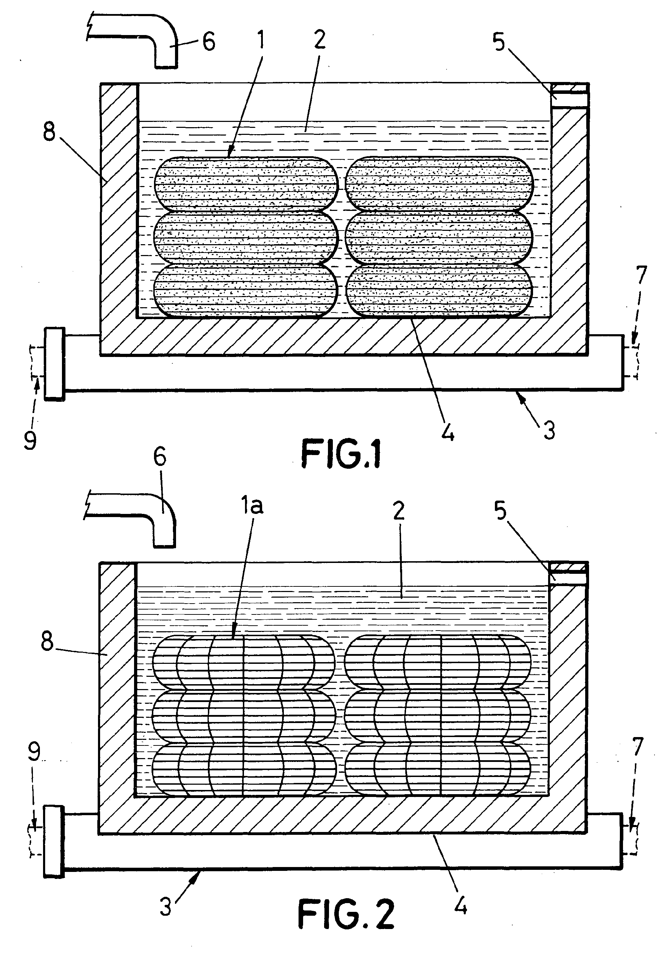

Figures 1 and 2 describe an embodiment of the system of the invention that comprises a reactor tank (8) where the tires (1) are stored and which is filled with a heat carrying fluid (2), for example, by means of some filling means defined by a duct (6), in such a way that the fluid bathes the tires (1) deposited in the reactor tank (8).

The fluid (2) is selected among used car oil, locomotion or heating gas oil, oils derived from petroleum with a viscosity range similar to that of commercial gas oil and which due to their properties, are considered as solvents, or else the oil itself of the tire obtained when the tire is decomposed according to the invention.

In order to favor the dissolving of the tires, the invention provides for the inclusion of external heaters (3) that carry out the heating of the reactor tank (8), and consequently, they produce the heating of the heat carrying fluid (2), which causes the gradual dissolving of the tires (1). The different products that comprise the tires, such as oil and powdered coal that partially dissolve in the heat carrying fluid (2) are obtained.

Once the tire has decomposed, the oil floats and the powdered coal is dissolved, and they are recovered by an overflow pipe (5) where they are expelled outside for their recovery. In order to expel them through the overflow pipe (5), more tires are added to the inside of the reactor tank (8) until the fluid overflows.

As a result of the entire process inside the reactor tank (8), the metal structure (1a) of the tires is deposited, a structure that is removed through the top part of the reactor (8) for reuse.

In an embodiment of the invention in order to heat the reactor tank (8), and consequently the heat carrying fluid, it is provided for that the heaters (3) be electric, gas, gas oil or fuel heaters or a combination thereof.

Another embodiment of the invention provides for the heaters being provided with an inlet (7) for connection to the exhaust pipes of cogeneration engines, so that these engines provide the energy that causes the heating of the heaters. In this case, the heaters (3) are provided with an outlet (9) through which the gases coming from the exhaust pipe of the vehicle are eliminated.

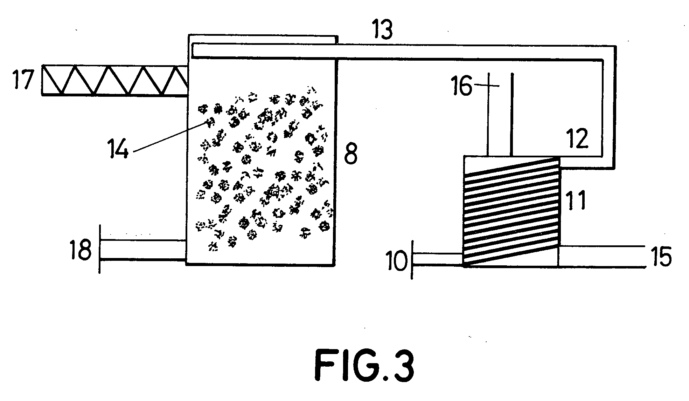

Hereinafter, another embodiment of the invention is described with the help of figure 3, wherein the system comprises a pipe (10) through which a cold heat carrying fluid is introduced in a heat exchanger (11), by means of which the fluid is heated and discharged through a pipe (12) that is connected to a pipe (13) included in the top part of the reactor tank (8) where cut up tires (14) are stored. The heat for the heat exchanger is introduced through the inlet (15) and comes out through the inlet (16) in order to close the heating circuit.

The pieces of tire (14) are introduced inside the tank (8) by an automatic feeding system (17) that introduces the previously cut up tires inside the tank. This same system can be used in the description of figures 1 and 2, in order to introduce whole or cut up tires into the reactor tank.

Under the automatic feeder (17) of the pieces of tire (14) there is a pipe (13) that runs perimetrically along the inside of the tank (8) and that comprises a plurality of holes distributed homogeneously to provide the heat carrying fluid as if it were a shower. In this way, the fluid gradually comes in contact with the surface of the tires, in such a way that they absorb the fluid and soften until they begin to dissolve and as they dissolve, the decomposition of the pieces of tire (14) into the different components thereof takes place. In this way at the bottom of the tank there is a horizontal pipe (18) that permits the discharge of the heat carrying fluid and of the tire oil obtained, together with the powdered coal dissolved in the oil.

Besides, the tank comprises a screen (not represented) wherein the pieces of steel in each piece of tire (14) are deposited, in such a way that the screen is periodically removed in order to remove the accumulated pieces of steel and then put back into place so that the process is carried out continuously. This same screen can be used in the embodiment described in figures 1 and 2, in order to withdraw the steel structure once the tire has dissolved.

## Claims

1. System for dissolving unuseable tires to obtain oils, coal and steel, **characterized in that** it comprises a reactor tank (8) wherein the discarded tires (1) are stored and wherein a heat carrying fluid (2), that gradually comes in contact with the surface of the tires that absorb it and soften until they are dissolved, is introduced.

2. System for dissolving unuseable tires to obtain oils, coal and steel, according to claim 1, **characterized in that** it comprises means for heating the heat carrying fluid that are selected among means for heating (3) the reactor tank (8) in order to heat by direct contact the heat carrying fluid that is stored therein, means for previously heating (11) the heat carrying fluid before it is introduced in the reactor tank and a combination thereof.

3. System for dissolving unuseable tires to obtain oils, coal and steel, according to claim 2, **characterized in that** the means for heating (3) the reactor tank (8) are comprised of external heaters (3) that heat the heat carrying fluid to a temperature between 275°C and 350°C.

4. System for dissolving unuseable tires to obtain oils, coal and steel, according to claim 2, **characterized in that** the means for heating (3) the reactor tank (8) are provided in the bottom part thereof.

5. System for dissolving unuseable tires to obtain oils, coal and steel, according to claim 3, **characterized in that** the external heaters (3) are selected from among electric, gas, gas oil, fuel heaters, heaters that comprise a connection (7) to some exhaust pipes of cogeneration engines for the heating thereof and that also comprise an outlet (9) for eliminating the gases introduced in said external heaters, coming from the exhaust pipe, and a combination thereof.

6. System for dissolving unuseable tires to obtain oils, coal and steel, according to claim 2, **characterized in that** the means for previously heating (11) the heat carrying fluid before it is introduced in the reactor tank comprise a heat exchanger (11) by means of which the heat carrying fluid is heated to a previously established temperature, selected among a temperature range between 350°C-450C°.

7. System for dissolving unuseable tires to obtain oils, coal and steel, according to any of the preceding claims, **characterized in that** the heat carrying fluid is comprised of a product selected from among used car oil, commercial gas oil used in diesel engines and heater burners, oils derived from petroleum with a viscosity range similar to that of commercial gas oil, the oil itself from the tires obtained after dissolving the tires, oils derived from petroleum that are stable at the temperature range of 275°C-350°C, fuel and a combination thereof.

8. System for dissolving unuseable tires to obtain oils, coal and steel, according to claim 1, **characterized in that** the reactor tank (8) comprises means for introducing a heat carrying fluid that are selected among a duct (6) and some means for providing (13) a shower of said heat carrying fluid located in the top part of the reactor tank (8).

9. System for dissolving unuseable tires to obtain oils, coal and steel, according to claim 8, **characterized in that** the means for providing (13) a shower of heat carrying fluid, are comprised of a pipe (13) provided with a plurality of homogeneously distributed holes.

10. System for dissolving unuseable tires to obtain oils, coal and steel, according to claims 6 and 8, **characterized in that** the pipe (13) is connected to the heat exchanger (11).

11. System for dissolving unuseable tires to obtain oils, coal and steel, according to claim 1, **characterized in that** the reactor tank (8) comprises means for removing the product resulting from the dissolving of the tires that are selected from among an overflow pipe (5) located in the top part of the reactor tank through which said product resulting from the dissolving of the tires comes out; a cone-shaped bottom of the tank that discharges into a pipe (18) for the discharge of the heat carrying fluid and of the oil obtained from the decomposition of the tire, along with powdered coal dissolved therein, and a combination thereof.

12. System for dissolving unuseable tires to obtain oils, coal and steel, according to claim 1, **characterized in that** the reactor tank (8) is at atmospheric pressure.

13. System for dissolving unuseable tires to obtain oils, coal and steel, according to claim 1, **characterized in that** the reactor tank (8) comprises an automatic tire feeder (17) for introducing the tires that are selected between whole tires and cut up tires (14).

14. System for dissolving unuseable tires to obtain oils, coal and steel, according to claim 13, **characterized in that** after the dissolving of the tire its metal structure is stacked in the reactor tank (8), from which the metal structure is removed for recycling thereof by some collecting means from the reactor tank (8) selected among the complete metal structure (1a) of the tire (1) and the pieces of steel of the metal structure of the pieces of tire (14); said means comprising a removable metal screen.

15. System for dissolving unuseable tires to obtain oils, coal and steel, according to claims 2 or 6, **characterized in that** the heat exchanger (11) is selectively heated by means of a burner or exhaust pipe of a cogeneration engine.

16. System for dissolving unuseable tires to obtain oils, coal and steel, according to any of the preceding claims, **characterized in that** other products derived from petroleum, selected from among plastic and rubber wastes are dissolved.
